# EUROPEAN PATENT APPLICATION

(11) **EP 4 715 974 A1**
(43) Date of publication of application: **25.03.2026**
(21) Application number: 25219290.1
(22) Date of filing: 30.09.2021
(51) Int. Cl.: H01M 50/148, H01M 50/342

(54) **BATTERY CELL AND METHOD AND SYSTEM FOR MANUFACTURING SAME, AND BATTERY AND ELECTRIC DEVICE**

(62) Divisional of application: 21953609.1
(71) Applicant: Contemporary Amperex Technology (Hong Kong) Limited, Central, Central And Western District (HK)
(72) Inventor: FANG, Kun, Ningde City, Fujian, 352100 (CN); GUO, Zhijun, Ningde City, Fujian, 352100 (CN)
(74) Representative: Kraus & Lederer PartGmbB

(57) **Abstract**

Embodiments of this application provide a battery cell (7), a method and system for manufacturing same, a battery, and an electrical device. The battery cell (7) includes: a housing (20), on which an opening (21) is made; an electrode assembly (10), accommodated in the housing (20), where a first tab (12) is disposed on the electrode assembly (10) at an end oriented toward the opening (21); and an end cap (30), configured to fit and cover the opening (21). The end cap (30) includes a cap body (31) and a first protruding portion (32) connected to the cap body (31). A fragile portion (311) is disposed on the cap body (31). The end cap (30) is configured to rupture along the fragile portion (311) when an internal pressure of the battery cell (7) reaches a threshold, so as to release the internal pressure. The first protruding portion (32) protrudes from the cap body (31) toward the electrode assembly (10), and is configured to support the first tab (12) so that an avoidance clearance (G) configured to avoid the fragile portion (311) is formed between the first tab (12) and the cap body (31). This application reduces the risk that the first tab (12) crushes the fragile portion (311), and improves the sealing performance and safety performance of the battery cell (7).

## Description

### TECHNICAL FIELD

This application relates to the technical field of batteries, and more specifically, to a battery cell, a method and system for manufacturing same, a battery, and an electrical device.

### BACKGROUND

Battery cells are widely used in electronic devices such as a mobile phone, a notebook computer, an electric power cart, an electric vehicle, an electric airplane, an electric ship, an electric toy car, an electric toy ship, an electric toy airplane, and a power tool. The battery cells may include a nickel-cadmium battery cell, a nickel-hydrogen battery cell, a lithium-ion battery cell, a secondary alkaline zinc-manganese battery cell, and the like.

In the development of battery technology, safety is a non-negligible problem in addition to improvement of the performance of the battery cell. If the safety of the battery cell is not guaranteed, the battery cell is not suitable for use. Therefore, how to enhance the safety of the battery cell is an urgent technical problem in the battery technology.

### SUMMARY

This application provides a battery cell, a method and system for manufacturing same, a battery, and an electrical device to enhance safety of the battery cell.

According to a first aspect, an embodiment of this application provides a battery cell, including: a housing, on which an opening is made; an electrode assembly, accommodated in the housing, where a first tab is disposed on the electrode assembly at an end oriented toward the opening; and an end cap, configured to fit and cover the opening. The end cap includes a cap body and a first protruding portion connected to the cap body. A fragile portion is disposed on the cap body. The end cap is configured to rupture along the fragile portion when an internal pressure of the battery cell reaches a threshold, so as to release the internal pressure. The first protruding portion protrudes from the cap body toward the electrode assembly, and is configured to support the first tab so that an avoidance clearance configured to avoid the fragile portion is formed between the first tab and the cap body.

In the foregoing technical solution, the first protruding portion that protrudes from the cap body supports the first tab, thereby reducing the shaking amplitude of the electrode assembly during vibration of the battery cell, and improving stability of the electrode assembly. The first protruding portion supports the first tab so that an avoidance clearance configured to avoid the fragile portion is formed between the first tab and the cap body, thereby reducing the risk that the electrode assembly crushes the fragile portion, reducing the probability of failure of the fragile portion, and improving the safety of the battery cell.

In some embodiments, a first recessed portion is formed on the end cap at a position corresponding to the first protruding portion. The first recessed portion is recessed from an outer surface of the cap body toward the electrode assembly. A bottom face of the first recessed portion is closer to the first tab than the inner surface of the cap body.

The foregoing technical solution ensures an appropriate amount by which the first protruding portion protrudes from the cap body, so as to more effectively support the first tab, increase the size of the avoidance clearance along the thickness direction, and further reduce the risk that the electrode assembly crushes the fragile portion. At the same time, on the premise of ensuring an appropriate protrusion amount of the first protruding portion, this embodiment of this application further ensures an appropriate recessing amount of the first recessed portion, thereby increasing elasticity of the first protruding portion and reducing the risk that the first protruding portion crushes the first tab during assembling.

In some embodiments, the first protruding portion is configured to abut on and be welded to the first tab to implement electrical connection between the end cap and the first tab.

In the foregoing technical solution, the end cap may be directly electrically connected to the first tab by the first protruding portion, thereby simplifying the structure of the battery cell.

In some embodiments, the battery cell further includes a current collecting member disposed between the end cap and the first tab. The current collecting member is configured to connect the end cap and the first tab to implement electrical connection between the end cap and the first tab. In a thickness direction of the end cap, the avoidance clearance is located between the current collecting member and the cap body.

The first protruding portion protrudes from the cap body. Therefore, the first protruding portion separates the cap body from the first tab in the thickness direction. If the end cap and the first tab are directly connected, the first tab can be connected just to the first protruding portion of the end cap. In this way, a region of the first tab, from which the current can be directly transmitted, is restricted by the first protruding portion. In the foregoing technical solution, the first tab and the end cap are connected by a current collecting member. In this way, the region of the first tab, from which the current can be directly transmitted, is no longer restricted by the first protruding portion. The current of the first tab can flow together into the end cap through the current collecting member. In this way, the current collecting member can reduce the difference of paths along which different regions of the first tab conduct the current to the end cap, improve uniformity of a current density of a first electrode plate, reduce an internal resistance, and increase a flow capacity and charging efficiency of the battery cell. The avoidance clearance is located between the current collecting member and the cap body, thereby not only reducing the risk that the current collecting member crushes the fragile portion, but also reducing the probability that the current collecting member blocks a degassing channel when the fragile portion is ruptured, ensuring smooth degassing, and improving safety.

In some embodiments, the current collecting member overlays the fragile portion along the thickness direction of the end cap to separate the fragile portion from the first tab.

In the foregoing technical solution, the current collecting member can separate the fragile portion from the first tab, so as to reduce active particles dropping onto the fragile portion from the electrode assembly and reduce the risk of corroding the fragile portion.

In some embodiments, the first protruding portion surrounds the cap body. The current collecting member is configured to connect the cap body and the first tab to implement the electrical connection between the end cap and the first tab.

In some embodiments, the current collecting member includes a first current collecting portion and a second current collecting portion connected to the first current collecting portion. The first current collecting portion is configured to be connected to the first tab so that the current collecting member is electrically connected to the first tab. The second current collecting portion is configured to be connected to the cap body so that the current collecting member is electrically connected to the end cap. The first current collecting portion is disposed protrusively on a surface that is of the second current collecting portion and that is oriented toward the electrode assembly. An avoidance recess is formed on the current collecting member at a position corresponding to the first current collecting portion, and the avoidance recess is recessed toward the electrode assembly from a surface that is of the second current collecting portion and that is oriented away from the electrode assembly, so as to form the avoidance clearance between the current collecting member and the cap body.

In the foregoing technical solution, the avoidance recess is disposed to form an avoidance clearance and prevent the first current collecting portion from abutting on the cap body, thereby reducing the risk that the first current collecting portion crushes the fragile portion, and improving safety. The first current collecting portion supports a middle region of the first tab, and the first protruding portion supports an edge region of the first tab, thereby improving uniformity of the force on the first tab and reducing the risk of offset and misalignment of the electrode plate of the electrode assembly in the thickness direction.

In some embodiments, the first current collecting portion is configured to abut on and be welded to the first tab, and the second current collecting portion is configured to abut on and be welded to the cap body.

In the foregoing technical solution, the avoidance recess reduces the thickness of the first current collecting portion, thereby reducing the welding power required for welding the first current collecting portion to the first tab, reducing heat emission, and reducing the risk of burning other members.

In some embodiments, at least a part of the current collecting member is located between the first protruding portion and the first tab. The first protruding portion supports the first tab through the current collecting member.

In the foregoing technical solution, the first protruding portion supports the first tab through the current collecting member, thereby reducing the shaking amplitude of the electrode assembly during vibration of the battery cell, and improving stability of the electrode assembly. At the same time, the first protruding portion supports the current collecting member so that an avoidance clearance is formed between the current collecting member and the cap body.

In some embodiments, a part of the current collecting member is configured to abut on and be welded to the first tab, and another part of the current collecting member is configured to abut on and be welded to the first protruding portion.

In the foregoing technical solution, the welding reduces a contact resistance between the current collecting member and the end cap, and a contact resistance between the current collecting member and the first tab, and improves the flow capacity.

In some embodiments, the current collecting member is a flat plate structure.

In the foregoing technical solution, the flat plate-shaped current collecting member is easier to form. The flat plate-shaped current collecting member can be entirely in contact with the first tab, thereby increasing a flow area, enabling the current collecting member to support the first tab more evenly, and reducing the risk of offset and misalignment of the electrode plate of the electrode assembly in the thickness direction. Further, the flat plate-shaped current collecting member can be fully separated from the cap body, so as to ensure a sufficient avoidance clearance between the current collecting member and the cap body, and reduce the risk of contact between the current collecting member and the fragile portion.

In some embodiments, the first protruding portion surrounds the cap body.

In some embodiments, the cap body surrounds the first protruding portion.

In some embodiments, the end cap further includes a second protruding portion. The second protruding portion surrounds the cap body. The second protruding portion protrudes from an inner surface of the cap body toward the electrode assembly, and a top end face of the second protruding portion is closer to the first tab than a top end face of the first protruding portion, so that the second protruding portion abuts on the first tab and is configured to support the first tab.

In the foregoing technical solution, the first protruding portion supports a middle region of the first tab through the current collecting member, and the second protruding portion supports an edge region of the first tab, thereby improving uniformity of the force on the first tab and reducing the risk of offset and misalignment of the electrode plate of the electrode assembly in the thickness direction.

In some embodiments, a second recessed portion is formed on the end cap at a position corresponding to the second protruding portion. The second recessed portion is recessed from an outer surface of the cap body toward the electrode assembly. A bottom face of the second recessed portion is closer to the first tab than the inner surface of the cap body.

On the premise of ensuring an appropriate protrusion amount of the second protruding portion, the foregoing technical solution further ensures an appropriate recessing amount of the second recessed portion, thereby increasing elasticity of the second protruding portion and reducing the risk that the second protruding portion crushes the first tab during assembling.

In some embodiments, an outer side face of the second protruding portion abuts on an inner surface of the housing and is configured to be welded to the housing to close the opening.

In the foregoing technical solution, the sealing is implemented by welding, so as to reduce the risk of leaking an electrolytic solution, and increase the connection strength and flow capacity between the second protruding portion and the housing. The second recessed portion can reduce the strength of the second protruding portion and increase elasticity of the second protruding portion. In this way, during welding between the second protruding portion and the housing, the second protruding portion can deform to release the welding stress, thereby reducing the risk of deformation and cracking of the weld region, and improving the sealing performance.

In some embodiments, the cap body is a flat plate structure.

In some embodiments, the cap body includes a main plate body and a third protruding portion. The main plate body surrounds the third protruding portion, the first protruding portion surrounds the main plate body, and the fragile portion is formed on the third protruding portion. The main plate body includes a first inner surface and a first outer surface that are disposed opposite to each other. The first inner surface is oriented toward the electrode assembly. Both the first protruding portion and the third protruding portion protrude from the first inner surface toward the electrode assembly, and a top end face of the first protruding portion is closer to the first tab than a top end face of the third protruding portion, so that the avoidance clearance configured to avoid the fragile portion is formed between the current collecting member and the third protruding portion.

By disposing the third protruding portion in the middle of the end cap, the foregoing technical solution increases the strength of the end cap and reduces deformation of the end cap. The third protruding portion is in a protruding state and is not prone to deform. Therefore, the fragile portion disposed on the third protruding portion can reduce creeping of the fragile portion, thereby reducing the risk of failure of the fragile portion. In the foregoing technical solution, the avoidance clearance is formed between the third protruding portion and the current collecting member to reduce the risk that the current collecting member blocks a degassing channel when the fragile portion is ruptured, ensure smooth degassing, and reduce safety hazards.

In some embodiments, a third recessed portion is formed on the cap body at a position corresponding to the third protruding portion. The third recessed portion is recessed from the first outer surface toward the electrode assembly. The fragile portion is formed in a region opposite to a bottom face of the third recessed portion on the third protruding portion.

In the foregoing technical solution, the fragile portion is formed in the region opposite to the bottom face of the third recessed portion on the third protruding portion, thereby increasing the distance between the fragile portion and other external components, and reducing the risk that an external component crushes the fragile portion.

In some embodiments, a groove is made on the cap body. The fragile portion is formed in a region opposite to the groove on the cap body.

In the foregoing technical solution, the thickness and strength of the fragile portion are reduced by the groove, so that the end cap can be ruptured along the fragile portion when the internal pressure of the battery cell reaches the threshold.

In some embodiments, the end cap is configured to electrically connect the first tab and the housing.

In the foregoing technical solution, the housing itself may serve as an output electrode of the battery cell. When a plurality of battery cells are assembled into a group, the housing may be electrically connected to a busbar component, thereby not only increasing the flow area, but also making the structural design of the busbar component more flexible.

In some embodiments, the housing includes a sidewall and a bottom wall connected to the sidewall. The sidewall extends along the thickness direction of the end cap and is disposed around the electrode assembly. An electrode lead-out hole is disposed on the bottom wall. The electrode assembly further includes a second tab. The first tab and the second tab are of opposite polarities and located at two ends of the electrode assembly respectively. The battery cell further includes an electrode terminal mounted in the electrode lead-out hole, and the electrode terminal is electrically connected to the second tab.

In the foregoing technical solution, the bottom wall and the electrode terminal may serve as two output electrodes of the battery cell respectively, thereby simplifying the structure of the battery cell and ensuring a high flow capacity of the battery cell. The bottom wall and the electrode terminal are located at the same end of the battery cell. In this way, when a plurality of battery cells are assembled in groups, the busbar component may be fitted onto the same side of the battery cell, thereby simplifying the assembling process and improving the assembling efficiency.

In some embodiments, the bottom wall and the sidewall are disposed in a one-piece form. This technical solution avoids the step of connecting the bottom wall and the sidewall.

In some embodiments, the first tab is a negative tab, and a substrate material of the housing is steel.

In the foregoing technical solution, the housing is electrically connected to the negative tab. That is, the housing is in a low-potential state. The steel housing in the low-potential state is not prone to be corroded by an electrolytic solution, thereby reducing safety hazards.

In some embodiments, a substrate material of the housing is identical to a substrate material of the end cap. This technical solution ensures sufficient welding strength between the housing and the end cap, and ensures airtightness of the battery cell.

In some embodiments, the battery cell is a cylindrical cell.

According to a second aspect, an embodiment of this application provides a battery, including a plurality of battery cells according to any embodiment in the first aspect.

According to a third aspect, an embodiment of this application provides an electrical device, including the battery according to the second aspect. The battery is configured to provide electrical energy.

According to a fourth aspect, an embodiment of this application provides a method for manufacturing a battery cell, including:
providing a housing, where an opening is made on the housing;
providing an electrode assembly, and mounting the electrode assembly into the housing, where a first tab is disposed on the electrode assembly at an end oriented toward the opening;
providing an end cap, where the end cap includes a cap body and a first protruding portion connected to the cap body, and a fragile portion is disposed on the cap body; and
connecting the end cap to the housing so that the end cap fits and covers the opening.

The end cap is configured to rupture along the fragile portion when an internal pressure of the battery cell reaches a threshold, so as to release the internal pressure. The first protruding portion protrudes from the cap body toward the electrode assembly, and is configured to support the first tab so that an avoidance clearance configured to avoid the fragile portion is formed between the first tab and the cap body.

According to a fifth aspect, an embodiment of this application provides a system for manufacturing a battery cell, including:
a first providing apparatus, configured to provide a housing, where an opening is made on the housing;
a second providing apparatus, configured to provide an electrode assembly, and mount the electrode assembly into the housing, where a first tab is disposed on the electrode assembly at an end oriented toward the opening;
a third providing apparatus, configured to provide an end cap, where the end cap includes a cap body and a first protruding portion connected to the cap body, and a fragile portion is disposed on the cap body; and
an assembling apparatus, configured to connect the end cap to the housing so that the end cap fits and covers the opening.

The end cap is configured to rupture along the fragile portion when an internal pressure of the battery cell reaches a threshold, so as to release the internal pressure. The first protruding portion protrudes from the cap body toward the electrode assembly, and is configured to support the first tab so that an avoidance clearance configured to avoid the fragile portion is formed between the first tab and the cap body.

### BRIEF DESCRIPTION OF DRAWINGS

To describe the technical solutions in the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to some embodiments of this application;
FIG. 2 is a schematic exploded view of a battery according to some embodiments of this application;
FIG. 3 is a schematic exploded view of the battery module shown in FIG. 2;
FIG. 4 is a schematic exploded view of a battery cell according to some embodiments of this application;
FIG. 5 is a schematic sectional view of a battery cell according to some embodiments of this application;
FIG. 6 is a schematic close-up view of a circled position A of the battery cell shown in FIG. 5;
FIG. 7 is a schematic sectional view of a battery cell according to other embodiments of this application;
FIG 8 is a schematic close-up view of a circled position B of the battery cell shown in FIG. 7;
FIG. 9 is a schematic sectional view of a battery cell according to still other embodiments of this application;
FIG. 10 is schematic close-up view of a boxed position C of the battery cell shown in FIG. 9;
FIG. 11 is a schematic flowchart of a method for manufacturing a battery cell according to some embodiments of this application; and
FIG. 12 is a schematic block diagram of a system for manufacturing a battery cell according to some embodiments of this application.

The drawings are not drawn to scale.

### DETAILED DESCRIPTION OF EMBODIMENTS

To make the objectives, technical solutions, and advantages of the embodiments of this application clearer, the following gives a clear description of the technical solutions in the embodiments of this application with reference to the drawings in the embodiments of this application. Evidently, the described embodiments are merely a part of but not all of the embodiments of this application. All other embodiments derived by a person of ordinary skill in the art based on the embodiments of this application without making any creative efforts fall within the protection scope of this application.

Unless otherwise defined, all technical and scientific terms used herein have the same meanings as normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell. The battery cell may be in various shapes such as a cylinder, flat body, or cuboid, without being limited in embodiments of this application.

The battery mentioned in embodiments of this application means a stand-alone physical module that includes one or more battery cells to provide a higher voltage and a higher capacity. For example, the battery mentioned in this application may include a battery module, a battery pack, or the like. A battery typically includes a box configured to package one or more battery cells. The box can prevent liquid or other foreign matters from affecting the charging or discharging of the battery cells.

A battery cell includes an electrode assembly and an electrolytic solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. The positive active material layer is applied onto a surface of the positive current collector. The positive current collector includes a positive coated region and a positive tab connected to the positive coated region. The positive coated region is coated with a positive active material layer, and the positive tab is not coated with the positive active material layer. Using a lithium-ion battery as an example, the positive current collector may be made of aluminum. The positive active material layer includes a positive active material. The positive active material may be lithium cobalt oxide, lithium iron phosphate, ternary lithium, lithium manganese oxide, or the like. The negative electrode plate includes a negative current collector and a negative active material layer. The negative active material layer is applied onto a surface of the negative current collector. The negative current collector includes a negative coated region and a negative tab connected to the negative coated region. The negative coated region is coated with a negative active material layer, and the negative tab is not coated with the negative active material layer. The negative current collector may be made of copper. The negative active material layer includes a negative active material. The negative active material may be carbon, silicon, or the like. The separator may be made of a material such as polypropylene (PP) or polyethylene (PE).

The battery cell further includes a housing and an end cap. An opening is made on the housing, and the housing is configured to accommodate the electrode assembly. The electrode assembly may be fitted into the housing through the opening of the housing. The end cap is configured to fit and cover the opening of the housing to implement sealing.

For a battery cell, main safety hazards come from a charging process and a discharging process. In addition, an appropriate ambient temperature needs to be designed. To effectively avoid unnecessary losses, the battery cell is generally protected by at least three protective measures. Specifically, the protective measures at least include a switch element, selecting an appropriate separator material, and a pressure relief mechanism. The switch element is an element that, when a temperature or resistance in the battery cell reaches a given threshold, causes the battery to stop charging or discharging. The separator is configured to separate the positive electrode plate from the negative electrode plate, and, when the temperature rises to a given value, automatically melt micron-scale (or even nanoscale) micropores attached to the separator, so as to prevent metal ions from passing through the separator and terminate internal reactions of the battery cell.

The pressure relief mechanism means an element or component that is actuated to relieve an internal pressure when the internal pressure of the battery cell reaches a preset threshold. The threshold may vary depending on design requirements. The threshold may depend on the material of one or more of the positive electrode plate, the negative electrode plate, the electrolytic solution, or the separator in the battery cell.

The term "actuated" mentioned in this application means that the pressure relief mechanism performs an action or is activated to a given state so that the internal pressure of the battery cell is relieved. The actions performed by the pressure relief mechanism may include, but without being limited to, rupturing, shattering, tearing, or bursting open at least a part of the pressure relief mechanism, or the like. When the pressure relief mechanism is actuated, high-temperature and high-pressure substances inside the battery cell are expelled as emissions out of the actuated position. In this way, the pressure of the battery cell is released under a circumstance of a controllable pressure to avoid potential severer accidents. The emissions out of the battery cell mentioned in this application include but are not limited to: electrolytic solution, melted or split positive and negative electrode plates, fragments of the separator, reaction-induced high-temperature and high-pressure gases, flames, and the like.

The pressure relief mechanism on the battery cell is important to the safety of the battery cell. For example, in a case of a short circuit, overcharge, or the like, thermal runaway may occur inside the battery cell, resulting in a surge in pressure. In this case, the internal pressure may be released outward through the actuation of the pressure relief mechanism to prevent explosion and fire of the battery cell.

The pressure relief mechanism may be in the form of an explosion-proof valve, a gas valve, a pressure relief valve, a safety valve, or the like, and may specifically be a pressure-sensitive element or structure. To be specific, when the internal pressure of the battery cell reaches a preset threshold, the pressure relief mechanism performs an action or a fragile structure disposed in the pressure relief mechanism is ruptured to form an opening or channel for releasing the internal pressure.

To simplify the structure of the battery cell, the inventor tried integrating a pressure relief mechanism onto an end cap. For example, the inventor disposes a fragile portion on the end cap. The end cap is configured to rupture along the fragile portion when an internal pressure of the battery cell reaches a threshold, so as to release the internal pressure. In a case of a short circuit, overcharge, or the like, thermal runaway may occur inside the battery cell, resulting in a surge in pressure. In this case, the internal pressure may be released outward by rupturing the fragile portion, so as to prevent the battery cell from exploding and catching fire, and improve safety.

However, through research, the inventor finds that when the battery cell vibrates, a tab of an electrode assembly is prone to squeeze and impact the fragile portion. Due to low strength of the fragile portion, the fragile portion squeezed or impacted by the tab may rupture prematurely before the internal pressure of the battery cell reaches the threshold, thereby causing failure of the battery cell and resulting in safety problems.

In view of this, an embodiment of this application provides a technical solution. In this technical solution, an end cap includes a cap body and a first protruding portion connected to the cap body. A fragile portion is disposed on the cap body. The first protruding portion protrudes from the cap body toward an electrode assembly, and is configured to support a tab of the electrode assembly so that an avoidance clearance configured to avoid the fragile portion is formed between the tab and the cap body. The battery cell in such a structure can reduce the risk that the electrode assembly crushes the fragile portion, and improve safety of the battery cell.

The technical solution described in this embodiment of this application is applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in embodiments of this application.

For ease of description in the following embodiments, a vehicle is used as an example of the electrical device.

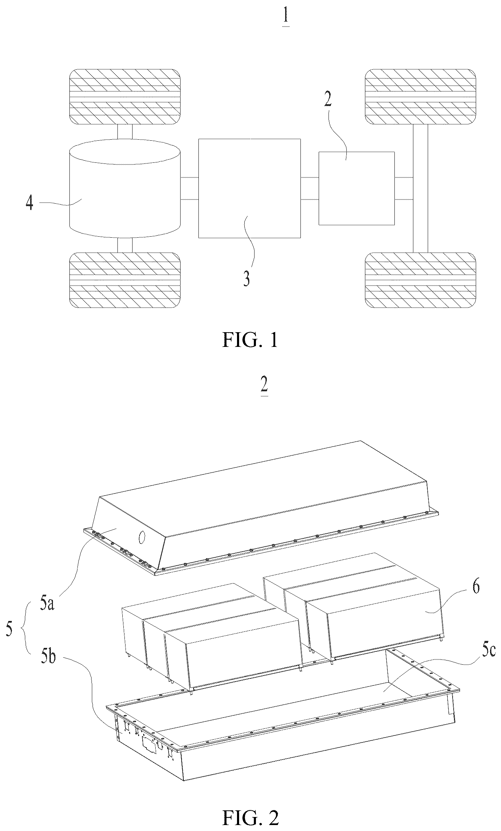

FIG. 1 is a schematic structural diagram of a vehicle according to some embodiments of this application. As shown in FIG. 1, a battery 2 is disposed inside the vehicle 1. The battery 2 may be disposed at the bottom, front, or rear of the vehicle 1. The battery 2 may be configured to supply power to the vehicle 1. For example, the battery 2 may serve as an operating power supply of the vehicle 1.

The vehicle 1 may further include a controller 3 and a motor 4. The controller 3 is configured to control the battery 2 to supply power to the motor 4, for example, to meet electrical energy requirements in starting, navigating, or running the vehicle 1.

In some embodiments of this application, the battery 2 serves not only as an operating power supply of the vehicle 1, but may also serve as a drive power supply of the vehicle 1 to provide driving power for the vehicle 1 in place of or partly in place of oil or natural gas.

FIG. 2 is a schematic exploded view of a battery according to some embodiments of this application. As shown in FIG. 2, the battery 2 includes a box 5 and a battery cell (not shown in FIG. 2). The battery cell is accommodated in the box 5.

The box 5 is configured to accommodate the battery cell. The box 5 may be one of various structures. In some embodiments, the box 5 may include a first box portion 5a and a second box portion 5b. The first box portion 5a and the second box portion 5b fit and cover each other. The first box portion 5a and the second box portion 5b together define an accommodation space 5c configured to accommodate the battery cell. The second box portion 5b may be a hollowed-out structure that is opened at one end. The first box portion 5a is a plate-shaped structure. The first box portion 5a fits and covers the opening of the second box portion 5b to form the box 5 that includes the accommodation space 5c. The first box portion 5a and the second box portion 5b each may be a hollowed-out structure that is opened at one end. The opening of the first box portion 5a fits the opening of the second box portion 5b, so as to form the box 5 with the accommodation space 5c. Definitely, the first box portion 5a and the second box portion 5b may be in various shapes, such as a cylinder or cuboid.

To improve airtightness between the first box portion 5a and the second box portion 5b that are connected, a sealing element such as a sealant or a sealing ring may be disposed between the first box portion 5a and the second box portion 5b.

Assuming that the first box portion 5a fits on the top of the second box portion 5b, the first box portion 5a may also be referred to as an upper box, and the second box portion 5b may also be referred to as a lower box.

There may be one or more battery cells in the battery 2. If there are a plurality of battery cells, the plurality of battery cells may be connected in series, parallel, or series-and-parallel pattern. The series-and-parallel pattern means a combination of series connection and parallel connection of the plurality of battery cells. The plurality of battery cells may be directly connected in series, parallel, or series-and-parallel pattern, and then the whole of the plurality of battery cells may be accommodated in the box 5. Alternatively, the plurality of battery cells may be connected in series, parallel, or series-and-parallel pattern to form a battery module 6, and then a plurality of battery modules 6 are connected in series, parallel, or series-and-parallel pattern to form a whole for being accommodated in the box 5.

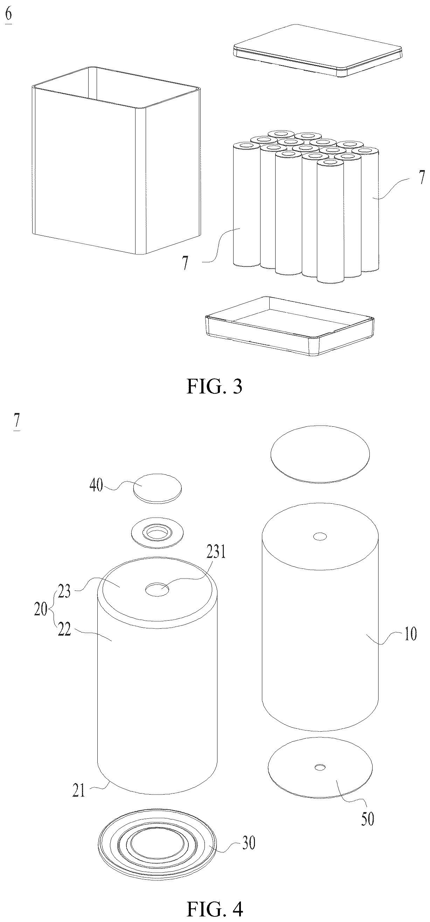

FIG. 3 is a schematic exploded view of the battery module shown in FIG. 2.

In some embodiments, as shown in FIG. 3, there are a plurality of battery cells 7. The plurality of battery cells 7 are connected in series, parallel, or series-and-parallel pattern to form a battery module 6 first. A plurality of battery modules 6 are then connected in series, parallel, or series-and-parallel pattern to form a whole for being accommodated in the box.

The plurality of battery cells 7 in the battery module 6 may be electrically connected by a busbar component, so as to implement parallel connection, series connection, or series-parallel connection between the plurality of battery cells 7 in the battery module 6.

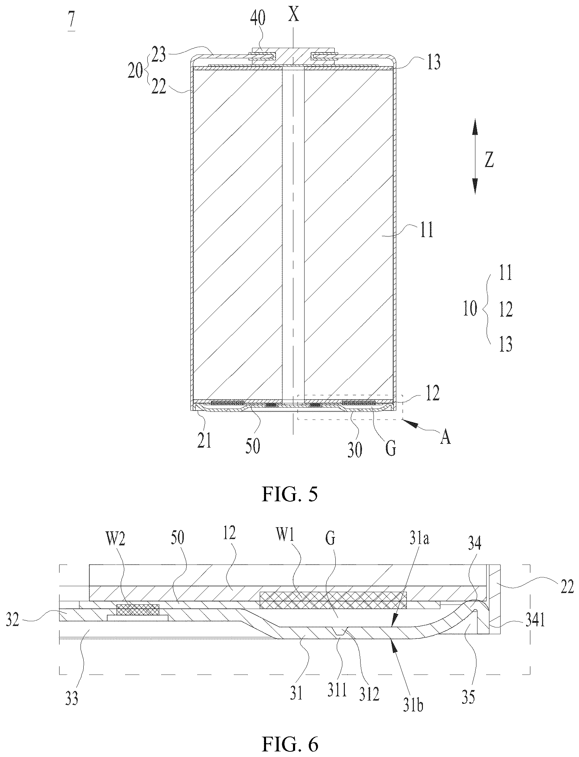

FIG. 4 is a schematic exploded view of a battery cell according to some embodiments of this application; FIG. 5 is a schematic sectional view of a battery cell according to some embodiments of this application; and FIG 6 is a schematic close-up view of a circled position A of the battery cell shown in FIG. 5.

As shown in FIG. 4 to FIG. 6, a battery cell 7 according to an embodiment of this application includes: a housing 20, on which an opening 21 is made; an electrode assembly 10, accommodated in the housing 20, where a first tab 12 is disposed on the electrode assembly 10 at an end oriented toward the opening 21; and an end cap 30, configured to fit and cover the opening 21. The end cap 30 includes a cap body 31 and a first protruding portion 32 connected to the cap body 31. A fragile portion 311 is disposed on the cap body 31. The end cap 30 is configured to rupture along the fragile portion 311 when an internal pressure of the battery cell 7 reaches a threshold, so as to release the internal pressure. The first protruding portion 32 protrudes from the cap body 31 toward the electrode assembly 10, and is configured to support the first tab 12 so that an avoidance clearance G configured to avoid the fragile portion 311 is formed between the first tab 12 and the cap body 31.

The electrode assembly 10 includes a first electrode plate, a second electrode plate, and a separator. The separator is configured to separate the first electrode plate from the second electrode plate. The first electrode plate and the second electrode plate are of opposite polarities. In other words, one of the first electrode plate or the second electrode plate is a positive electrode plate, and the other of the first electrode plate or the second electrode plate is a negative electrode plate.

Optionally, the first electrode plate, the second electrode plate, and the separator are all ribbon-shaped structures. The first electrode plate, the second electrode plate, and the separator are wound into one piece to form a jelly-roll structure. The jelly-roll structure may be a cylindrical structure, a flat structure, or other shaped structures.

Viewed from the appearance of the electrode assembly 10, the electrode assembly 10 includes a body portion 11, a first tab 12, and a second tab 13. The first tab 12 and the second tab 13 protrude from the body portion 11. The first tab 12 is a part uncoated with the active material layer on the first electrode plate, and the second tab 13 is a part uncoated with the active material layer on the second electrode plate. Correspondingly, one of the first tab 12 or the second tab 13 is a positive tab, and the other is a negative tab.

The first tab 12 and the second tab 13 may extend from the same end of the body portion 11, or extend from two opposite ends of the body portion respectively.

Illustratively, the first tab 12 and the second tab 13 are disposed at two ends of the body portion 11 respectively. In other words, the first tab 12 and the second tab 13 are disposed at the two ends of the electrode assembly 10 respectively. Optionally, the first tab 12 is located on the electrode assembly 10 at an end oriented toward the end cap 30. The second tab 13 is located on the electrode assembly 10 at an end oriented away from the end cap 30.

Optionally, the first tab 12 is wound around a central axis X of the electrode assembly 10 in circles. In other words, the first tab 12 includes a plurality of tab layers. After completion of the winding, the first tab 12 is approximately column-shaped, and a gap is left between two adjacent tab layers. In this embodiment of this application, the first tab 12 may be processed to reduce the gap between the tab layers and facilitate the connection between the first tab 12 and other conductive structures. For example, in this embodiment of this application, the first tab 12 may be kneaded and flattened, so that an end region that is of the first tab 12 and that is oriented away from the body portion 11 can be tucked and collected together. The kneading and flattening lead to formation of a densified end face at the end that is of the first tab 12 and that is oriented away from the body portion 11, thereby reducing the gap between the tab layers and facilitating the connection between the first tab 12 and other conductive structures. Alternatively, in this embodiment of this application, a conductive material may fill the gap between the two adjacent tab layers to reduce the gap between the tab layers.

Optionally, the second tab 13 is wound around the central axis X of the electrode assembly 10 in circles, so that the second tab 13 includes a plurality of tab layers. Illustratively, the second tab 13 is also kneaded and flattened to reduce the gap between the tab layers of the second tab 13.

The housing 20 is a hollowed-out structure opened at one end. The end cap 30 fits on, and is hermetically connected to, the opening 21 of the housing 20, to form an accommodation cavity configured to accommodate the electrode assembly 10 and the electrolytic solution.

The housing 20 is a structure hollowed out to form a space configured to accommodate the electrode assembly 10. The housing 20 may be in various shapes such as a cylinder or cuboid. The shape of the housing 20 may be determined depending on the specific shape of the electrode assembly 10. For example, if the electrode assembly 10 is a cylindrical structure, the housing may be a cylindrical housing. If the electrode assembly 10 is a cuboidal structure, the housing may be a cuboidal housing.

The housing 20 includes a sidewall 22 and a bottom wall 23. The sidewall 22 surrounds the electrode assembly 10, and the bottom wall 23 is connected to an end of the sidewall 22. The sidewall 22 is a column structure. For example, the sidewall 22 is a cylinder or a rectangular column. The bottom wall 23 is a plate-shaped structure, the shape of which corresponds to the shape of the sidewall 22. Optionally, an opening 21 is formed at one end of the sidewall 22. The bottom wall 23 is connected to an end that is of the sidewall 22 and that is oriented away from the opening 21.

The sidewall 22 and the bottom wall 23 may be an integrally formed structure. That is, the housing 20 is a one-piece member. Definitely, the sidewall 22 and the bottom wall 23 may be two stand-alone members provided separately, and may be connected together by welding, riveting, bonding, or other means.

The end cap 30 may be electrically connected to the electrode assembly 10, or may be insulated from the electrode assembly 10. Optionally, the end cap 30 is electrically connected to the first tab 12. Definitely, the end cap 30 may be directly electrically connected to the first tab 12, or may be electrically connected to the first tab 12 by other conductive members.

The housing 20 may be positively charged, negatively charged, or uncharged. To make the housing 20 charged, the housing 20 may be directly connected to the tab of the electrode assembly 10, or may be electrically connected to the tab through other conductive members.

The end cap 30 and the housing 20 may be connected by welding, so that the end cap 30 and the housing 20 are of the same polarity. Illustratively, to make the housing 20 positively charged, the housing 20 may be electrically connected to the positive tab by using the end cap 30. To make the housing 20 negatively charged, the housing 20 may be electrically connected to the negative tab by using the end cap 30. Definitely, the housing 20 may be connected to the tab by other conductive structures instead, without being limited in this embodiment.

The housing 20 and the end cap 30 may be made of the same material, or made of different materials.

The cap body 31 is a plate-shaped structure, and includes an inner surface and an outer surface that are disposed opposite to each other along the thickness direction Z of the end cap 30. The inner surface 31a of the cap body faces the electrode assembly 10. The inner surface 31a of the cap body may be a flat face, a curved face, or a combination of a flat face and a curved face. The outer surface 31b of the cap body may be a flat face, a curved face, or a combination of a flat face and a curved face. Optionally, the inner surface 31a of the cap body and the outer surface 31b of the cap body are both flat faces and parallel to each other.

The fragile portion 311 is a part of the cap body 31. The strength of the fragile portion 311 is less than that of other parts of the cap body 31. In this embodiment, the strength of the fragile portion 311 may be reduced by reducing the thickness of the fragile portion 311, changing the material of the fragile portion 311, or other means.

The fragile portion 311 may surround a central axis X of the electrode assembly 10 by one circle, or may surround the central axis by just 1/2, 2/3, or 3/4 circle, or the like, without being limited in this embodiment.

The first protruding portion 32 protrudes toward the electrode assembly 10 against the inner surface 31a of the cap body, so that at least a part of the first protruding portion 32 protrudes from the inner surface 31a of the cap body. This embodiment does not limit the amount by which the first protruding portion 32 protrudes from the inner surface 31a of the cap body.

There may be one or more first protruding portions 32. Optionally, when there are a plurality of first protruding portions 32, the plurality of first protruding portions 32 may be spaced out along a circumferential direction of the end cap 30.

The first protruding portions 32 may abut on the first tab 12 to directly support the first tab 12. Definitely, the first protruding portions 32 may indirectly support the first tab 12 by supporting other components.

In the thickness direction Z, the avoidance clearance G is located between the first tab 12 and the cap body 31. The avoidance clearance G is a space formed between the first tab 12 and the cap body 31 and unfilled with other solid members. The avoidance clearance G is opposite to the fragile portion 311 along the thickness direction Z, and therefore, serves to avoid the fragile portion 311.

Other members may be disposed between the first tab 12 and the cap body 31, as long as the avoidance clearance G can make the members avoid the fragile portion 311. Definitely, other members are not necessarily disposed between the first tab 12 and the cap body 31.

In this embodiment, the first protruding portion 32 that protrudes from the cap body 31 is able to support the first tab 12, thereby reducing the shaking amplitude of the electrode assembly 10 during vibration of the battery cell 7, and improving stability of the electrode assembly 10. The first protruding portion 32 supports the first tab 12 so that an avoidance clearance G configured to avoid the fragile portion 311 is formed between the first tab 12 and the cap body 31, thereby reducing the risk that the electrode assembly 10 crushes the fragile portion 311, reducing the probability of failure of the fragile portion 311, and improving the safety of the battery cell 7.

Especially, for the first tab 12 that is wound into a jelly-roll structure, the end face that is of the first tab and that is oriented away from the body portion 11 is not flat. If the end face of the first tab 12 crushes the fragile portion 311, the fragile portion 311 is more prone to rupture. In this application, the avoidance gap G is disposed to reduce the risk that the first tab 12 crushes the fragile portion 311 and reduce the probability of failure of the fragile portion 311.

In some embodiments, a groove 312 is made on the cap body 31. The fragile portion 311 is formed in a region opposite to the groove 312 on the cap body 31.

Optionally, the groove 312 may be disposed on the inner surface 31a of the cap body, and the fragile portion 311 is a part of the cap body 31, where the part is located between the bottom face of the groove 312 and the outer surface 31b of the cap body. Alternatively, the groove 312 may be disposed on the outer surface 31b of the cap body, and the fragile portion 311 is a part of the cap body 31, where the part is located between the bottom face of the groove 312 and the inner surface 31a of the cap body.

In this embodiment, the thickness and strength of the fragile portion 311 are reduced by the groove 312, so that the end cap 30 can be ruptured along the fragile portion 311 when the internal pressure of the battery cell 7 reaches the threshold.

In some embodiments, the groove 312 may be made on the inner surface 31a of the cap body. The groove 312 communicates with the avoidance clearance G.

The groove 312 in this embodiment further increases the spacing between the fragile portion 311 and the first tab 12, and reduces the risk of the first tab 12 crushing the fragile portion 311.

In some embodiments, the first tab 12 is electrically connected to the end cap 30.

The end cap 30 may be directly connected to the first tab 12. For example, the end cap 30 may be directly welded to the first tab 12 to implement electrical connection between the end cap 30 and the first tab 12.

Alternatively, the end cap 30 may be indirectly connected to the first tab 12 by other conductive structures (such as a current collecting member to be mentioned later) instead. In this embodiment, the first protruding portion 32 may be connected to the conductive structure, and the cap body 31 may also be connected to the conductive structure.

In this embodiment, the end cap 30 may be electrified, and may serve as an output electrode of the battery cell 7, thereby saving a conventional electrode terminal and simplifying the structure of the battery cell 7.

In some embodiments, the end cap 30 is configured to electrically connect the first tab 12 and the housing 20.

In this embodiment, the housing 20 itself may serve as an output electrode of the battery cell 7. When a plurality of battery cells 7 are assembled into a group, the housing 20 may be electrically connected to a busbar component, thereby not only increasing the flow area, but also making the structural design of the busbar component more flexible.

In some embodiments, the housing 20 includes a sidewall 22 and a bottom wall 23 connected to the sidewall 22. The sidewall 22 extends along the thickness direction Z of the end cap 30 and is disposed around the electrode assembly 10. An electrode lead-out hole 231 is disposed on the bottom wall 23. The electrode assembly 10 further includes a second tab 13. The first tab 12 and the second tab 13 are of opposite polarities and located at two ends of the electrode assembly 10 respectively. The battery cell 7 further includes an electrode terminal 40 mounted in the electrode lead-out hole 231, and the electrode terminal 40 is electrically connected to the second tab 13.

The second tab 13 may be directly electrically connected to the electrode terminal 40, or may be indirectly electrically connected to the electrode terminal 40 by other conductive structures.

The electrode terminal 40 is dielectrically disposed on the bottom wall 23. The electrode terminal 40 and the bottom wall 23 may be of different polarities. The electrode terminal 40 and the bottom wall 23 may serve as two output electrodes of the battery cell 7 respectively.

In a case that the first tab 12 is a negative tab and the second tab 13 is a positive tab, the bottom wall 23 is a negative output electrode of the battery cell 7, and the electrode terminal 40 is a positive output electrode of the battery cell 7. In a case that the first tab 12 is a positive tab and the second tab 13 is a negative tab, the bottom wall 23 is a positive output electrode of the battery cell 7, and the electrode terminal 40 is a negative output electrode of the battery cell 7.

The electrode terminal 40 is fixed onto the bottom wall 23. The electrode terminal 40 may be fixed as a whole onto the outer side of the bottom wall 23, or may extend into the interior of the housing 20 through the electrode lead-out hole 231.

The first tab 12 is located on the electrode assembly 10 at an end oriented toward the end cap 30, so as to facilitate electrical connection between the end cap 30 and the first tab 12. Correspondingly, the second tab 13 is located on the electrode assembly 10 at an end oriented toward the bottom wall 23, so as to facilitate electrical connection between the electrode terminal 40 and the second tab 13. In this embodiment of this application, the first tab 12 and the second tab 13 are disposed at the two ends of the electrode assembly 10 respectively, thereby reducing the risk of conduction between the first tab 12 and the second tab 13, and increasing the flow area of both the first tab 12 and the second tab 13.

In this embodiment, the bottom wall 23 and the electrode terminal 40 may serve as two output electrodes of the battery cell 7 respectively, thereby simplifying the structure of the battery cell 7 and ensuring a high flow capacity of the battery cell 7. The bottom wall 23 and the electrode terminal 40 are located at the same end of the battery cell 7. In this way, when a plurality of battery cells 7 are assembled in groups, the busbar component may be fitted onto the same side of the battery cell 7, thereby simplifying the assembling process and improving the assembling efficiency.

In some embodiments, the bottom wall 23 and the sidewall 22 are disposed in a one-piece form. This embodiment avoids the step of connecting the bottom wall 23 and the sidewall 22. The housing 20 may be formed by a stretching process.

The electrode lead-out hole 231 in this embodiment of this application is made after the housing 20 is formed by stretching.

The inventor hereof has tried an opening end of a housing that is made by calendering, in an attempt to fold the opening end of the housing inward to form a flanged structure. The flanged structure presses against the end cap to fix the end cap. The inventor mounts the electrode terminal onto the end cap, and uses the flanged structure and the electrode terminal as two output electrodes of the battery cell respectively. However, the larger the size of the flanged structure, the higher the risk of curling and wrinkling that the flanged structure incurs after the flanged structure is formed. The curling and wrinkling of the flanged structure lead to a bumpy surface of the flanged structure and, when the flanged structure is welded to the busbar component, result in poor welding. Therefore, the size of the flanged structure is relatively limited, resulting in an insufficient flow capacity of the battery cell.

In this embodiment, an electrode lead-out hole 231 configured to mount the electrode terminal 40 is formed on the bottom wall 23 by a hole-opening process, so as to dispose the positive output electrode and the negative output electrode on the battery cell 7 at an end oriented away from the opening 21. The bottom wall 23 is formed during the formation of the housing 20, so as to ensure flatness of the bottom wall 23 and high connection strength between the bottom wall 23 and the busbar component after the electrode lead-out hole 231 is made. At the same time, the flatness of the bottom wall 23 is not restricted by the size of the bottom wall. Therefore, the size of the bottom wall 23 may be relatively large, thereby improving the flow capacity of the battery cell 7.

In some embodiments, the first tab 12 is a negative tab, and a substrate material of the housing 20 is steel.

The housing 20 is electrically connected to the negative tab. That is, the housing 20 is in a low-potential state. The steel housing 20 in the low-potential state is not prone to be corroded by an electrolytic solution, thereby reducing safety hazards.

In some embodiments, the housing 20 is welded to the end cap 30. The welding not only implements the connection between the housing 20 and the end cap 30, improves the flow capacity between the housing 20 and the end cap 30, but also ensures airtightness.

In some embodiments, the substrate material of the housing 20 is identical to the substrate material of the end cap 30. Optionally, both the substrate material of the housing 20 and the substrate material of the end cap 30 are steel.

In this embodiment, the substrate material of the housing 20 is identical to the substrate material of the end cap 30, thereby ensuring sufficient welding strength between the housing 20 and the end cap 30, and ensuring the airtightness of the battery cell 7.

In some embodiments, the battery cell 7 is a cylindrical cell. Correspondingly, the electrode assembly 10 is a cylindrical structure, and the housing 20 is a cylindrical hollowed-out structure.

In some embodiments, a first recessed portion 33 is formed on the end cap 30 at a position corresponding to the first protruding portion 32. The first recessed portion is recessed from an outer surface 31b of the cap body toward the electrode assembly 10. A bottom face of the first recessed portion 33 is closer to the first tab 12 than the inner surface 31a of the cap body.

The first recessed portion 33 can reduce the strength of the first protruding portion 32, and increase the elasticity of the first protruding portion 32. In this way, in a process of the first protruding portion 32 extending into the housing 20 and pressing against the first tab 12, the first protruding portion 32 can deform to release the stress, reduce the impact force, and reduce the risk of crushing the first tab 12.

The first recessed portion 33 and the first protruding portion 32 may be formed by stamping the end cap 30. The greater the depth of the first recessed portion 33 along the thickness direction Z, the larger the amount by which the first protruding portion 32 protrudes from the inner surface 31a of the cap body, and the larger the avoidance clearance G.

This embodiment of this application ensures an appropriate amount by which the first protruding portion 32 protrudes from the cap body 31, so as to more effectively support the first tab 12, increase the size of the avoidance clearance G along the thickness direction Z, and further reduce the risk that the electrode assembly 10 presses against the fragile portion 311. At the same time, on the premise of ensuring an appropriate protrusion amount of the first protruding portion 32, this embodiment of this application further ensures an appropriate recessing amount of the first recessed portion 33, thereby increasing elasticity of the first protruding portion 32 and reducing the risk that the first protruding portion 32 crushes the first tab 12 during assembling.

Optionally, the bottom face of the first recessed portion 33 is a flat face and is parallel to the inner surface 31a of the cap body.

In some embodiments, the battery cell 7 further includes a current collecting member 50 disposed between the end cap 30 and the first tab 12. The current collecting member 50 is configured to connect the end cap 30 and the first tab 12 to implement electrical connection between the end cap 30 and the first tab 12. In a thickness direction Z of the end cap 30, the avoidance clearance G is located between the current collecting member 50 and the cap body 31.

The current collecting member 50 may be connected to the first tab 12 by welding, bonding, or other means to implement electrical connection to the first tab 12. The current collecting member 50 may be connected to the end cap 30 by welding, bonding, or other means to implement electrical connection to the end cap 30.

The current collecting member 50 may be connected to the first protruding portion 32, or connected to the cap body 31, or connected to another part of the end cap 30.

The first protruding portion 32 protrudes from the cap body 31. Therefore, the first protruding portion 32 separates the cap body 31 from the first tab 12 in the thickness direction Z. If the end cap 30 and the first tab 12 are directly connected, the first tab 12 can be connected just to the first protruding portion 32 of the end cap 30. If the first protruding portion 32 and the first tab 12 are directly connected, merely a part that is of the first tab 12 and that is opposite to the first protruding portion 32 can be directly connected to the first protruding portion 32. Consequently, the region of the first tab 12, from which the current can be directly transmitted, is restricted by the first protruding portion 32. The flow area between the first protruding portion 32 and the first tab 12 is insufficient. For the current carried on a part that is of the first tab 12 and that is opposite to the cap body 31 along the thickness direction Z, the current can flow to the first protruding portion 32 only after flowing to a part that is of the first tab 12 and that is welded to the first protruding portion 32. Consequently, different regions of the first tab 12 conduct the current to the end cap 30 along excessively different paths, thereby impairing the flow capacity and charging efficiency of the battery cell 7.

In this embodiment of this application, the first tab 12 and the end cap 30 are connected by the current collecting member 50. In this way, the region of the first tab 12, from which the current can be directly transmitted, is no longer restricted by the first protruding portion 32. The current of the first tab 12 can flow together into the end cap 30 through the current collecting member 50. In this way, the current collecting member 50 can reduce the difference of paths along which different regions of the first tab 12 conduct the current to the end cap 30, improve uniformity of the current density of the first electrode plate, reduce the internal resistance, and increase the flow capacity and charging efficiency of the battery cell 7.

In this embodiment, the avoidance clearance G is located between the current collecting member 50 and the cap body 31, thereby not only reducing the risk that the current collecting member 50 crushes the fragile portion 311, but also reducing the probability that the current collecting member 50 blocks a degassing channel when the fragile portion 311 is ruptured, ensuring smooth degassing, and improving safety.

In some embodiments, the current collecting member 50 overlays the fragile portion 311 along the thickness direction Z of the end cap 30 to separate the fragile portion 311 from the first tab 12.

A part of the current collecting member 50 is spaced apart from the fragile portion 311 along the thickness direction Z and overlays the fragile portion 311. A projection of the fragile portion 311 along the thickness direction Z is located within a projection of the current collecting member 50 along the thickness direction Z.

In this embodiment, the current collecting member 50 can separate the fragile portion 311 from the first tab 12, so as to reduce active particles dropping onto the fragile portion 311 from the electrode assembly 10 and reduce the risk of corroding the fragile portion 311.

In some embodiments, at least a part of the current collecting member 50 is located between the first protruding portion 32 and the first tab 12. The first protruding portion 32 supports the first tab 12 through the current collecting member 50.

The first protruding portion 32 supports the first tab 12 through the current collecting member 50, thereby reducing the shaking amplitude of the electrode assembly 10 during vibration of the battery cell 7, and improving stability of the electrode assembly 10. At the same time, the first protruding portion 32 supports the current collecting member 50 so that an avoidance clearance G is formed between the current collecting member 50 and the cap body 31.

In some embodiments, a part of the current collecting member 50 is configured to abut on and be welded to the first tab 12, and another part of the current collecting member 50 is configured to abut on and be welded to the first protruding portion 32.

During assembling of the battery cell 7, the current collecting member 50 is pressed against and welded to the first tab 12 to form the first weld portion W1, and then the end cap 30 is welded to the current collecting member 50 to form the second weld portion W2.

In this embodiment, two different parts of the current collecting member 50 are welded to the end cap 30 and the first tab 12 respectively, so as to reduce the risk of fusion-splicing between the first weld portion W1 and the second weld portion W2, and ensure the connection strength between the current collecting member 50 and the first tab 12 and the connection strength between the end cap 30 and the current collecting member 50.

The welding reduces a contact resistance between the current collecting member 50 and the end cap 30, and a contact resistance between the current collecting member 50 and the first tab 12, and improves the flow capacity.

In some embodiments, the current collecting member 50 is a flat plate structure.

The flat plate-shaped current collecting member 50 is easier to form. The flat plate-shaped current collecting member 50 can be entirely in contact with the first tab 12, thereby increasing a flow area, enabling the current collecting member 50 to support the first tab 12 more evenly, and reducing the risk of offset and misalignment of the electrode plate of the electrode assembly 10 in the thickness direction Z. Further, the flat plate-shaped current collecting member 50 can be fully separated from the cap body 31, so as to ensure a sufficient avoidance clearance G between the current collecting member 50 and the cap body 31, and reduce the risk of contact between the current collecting member 50 and the fragile portion 311.

In some embodiments, the cap body 31 surrounds the first protruding portion 32. In other words, the cap body 31 is an annular structure around the first protruding portion 32.

In some embodiments, the end cap 30 further includes a second protruding portion 34. The second protruding portion 34 surrounds the cap body 31. The second protruding portion 34 protrudes from an inner surface 31a of the cap body toward the electrode assembly 10, and a top end face of the second protruding portion 34 is closer to the first tab 12 than a top end face of the first protruding portion 32, so that the second protruding portion 34 abuts on the first tab 12 and is configured to support the first tab 12.

The second protruding portion 34 is an annular structure around the cap body 31. The top end face of the first protruding portion 32 abuts on the current collecting member 50. Optionally, the top end face of the first protruding portion 32 is a flat face. The top end face of the second protruding portion 34 abuts on the first tab 12. Optionally, the top end face of the second protruding portion 34 is a flat face or curved face.

The second protruding portion 34 is spaced apart from the current collecting member 50 to prevent the second protruding portion 34 from interfering with the abutment between the current collecting member 50 and the first protruding portion 32, and to ensure that the first protruding portion 32 closely fits the current collecting member 50. Optionally, the second protruding portion 34 surrounds the current collecting member 50.

The amount by which the second protruding portion 34 protrudes from the inner surface 31a of the cap body is greater than the amount by which the first protruding portion 32 protrudes from the inner surface 31a of the cap body, so that the top end face of the second protruding portion 34 is closer to the first tab 12 than the top end face of the first protruding portion 32.

In this embodiment, the first protruding portion 32 supports a middle region of the first tab 12 through the current collecting member 50, and the second protruding portion 34 supports an edge region of the first tab 12, thereby improving uniformity of the force on the first tab 12 and reducing the risk of offset and misalignment of the electrode plate of the electrode assembly 10 in the thickness direction Z.

In some embodiments, a second recessed portion 35 is formed on the end cap 30 at a position corresponding to the second protruding portion 34. The second recessed portion is recessed from an outer surface 31b of the cap body toward the electrode assembly 10. A bottom face of the second recessed portion 35 is closer to the first tab 12 than the inner surface 31a of the cap body.

The second recessed portion 35 can reduce the strength of the second protruding portion 34, and increase the elasticity of the second protruding portion 34. In this way, in a process of the second protruding portion 34 extending into the housing 20 and pressing against the first tab 12, the second protruding portion 34 can deform to release the stress, reduce the impact force, and reduce the risk of crushing the first tab 12.

The second recessed portion 35 and the second protruding portion 34 may be formed by stamping the end cap 30. The greater the depth of the second recessed portion 35 along the thickness direction Z, the larger the amount by which the second protruding portion 34 protrudes from the inner surface 31a of the cap body.

On the premise of ensuring an appropriate protrusion amount of the second protruding portion 34, this embodiment of this application further ensures an appropriate recessing amount of the second recessed portion 35, thereby increasing the elasticity of the second protruding portion 34 and reducing the risk that the second protruding portion 34 crushes the first tab 12 during assembling.

In some embodiments, an outer side face 341 of the second protruding portion abuts on an inner surface of the housing 20 and is configured to be welded to the housing 20 to close the opening 21.

The outer side face 341 of the second protruding portion is a surface of the second protruding portion 34, where the surface is oriented toward the sidewall 22 of the housing 20. The outer side face 341 of the second protruding portion is a column face. Optionally, the outer side face 341 of the second protruding portion is a cylindrical face.

The part of the second protruding portion 34, which extends into the housing 20, may be in interference fit, transition fit, or clearance fit with the housing 20. Optionally, the part of the second protruding portion 34, which extends into the housing 20, may be in interference fit with the housing 20. The interference fit increases connection strength between the housing 20 and the end cap 30, and improves the sealing performance.

Optionally, the second protruding portion 34 and the sidewall 22 of the housing 20 are connected by laser welding. During the welding, a laser beam is radiated on a junction between the second protruding portion 34 and the sidewall 22. The laser beam melts and connects together at least a part of the outer side face 341 of the second protruding portion and a part of the inner surface of the housing 20. The outer side face 341 of the second protruding portion abuts on the inner surface of the housing 20, thereby reducing the risk of burning the electrode assembly 10 by the laser beam radiated into the housing 20.

Alternatively, the laser beam may be radiated on an outer surface of the sidewall 22, where the outer surface is oriented away from the second protruding portion 34.

In this embodiment, the sealing is implemented by welding, so as to reduce the risk of leaking an electrolytic solution, and increase the connection strength and flow capacity between the second protruding portion 34 and the housing 20.

The second recessed portion 35 can reduce the strength of the second protruding portion 34 and increase the elasticity of the second protruding portion 34. In this way, during welding between the second protruding portion 34 and the housing 20, the second protruding portion 34 can deform to release the welding stress, thereby reducing the risk of deformation and cracking of the weld region, and improving the sealing performance. On the premise of ensuring an appropriate protrusion amount of the second protruding portion 34, this embodiment further ensures an appropriate recessing amount of the second recessed portion 35, so as to increase the elasticity of the second protruding portion 34 and enable the second protruding portion 34 to release the welding stress by deforming.

In some embodiments, the cap body 31 is a flat plate structure. The inner surface 31a of the cap body and the outer surface 31b of the cap body are both flat faces and parallel to each other.

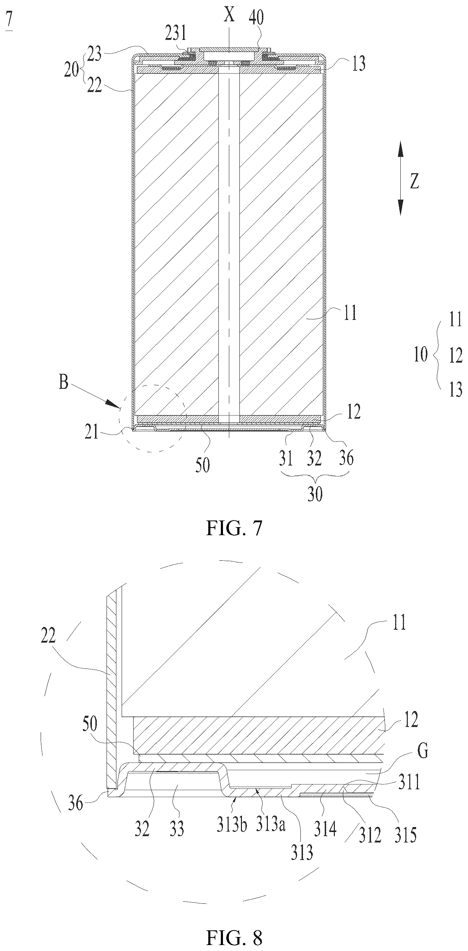

FIG. 7 is a schematic sectional view of a battery cell according to other embodiments of this application; and FIG. 8 is schematic close-up view of a circled position B of the battery cell shown in FIG. 7.

As shown in FIG. 7 and FIG. 8, in some embodiments, the first protruding portion 32 surrounds the cap body 31. In other words, the first protruding portion 32 is an annular structure around the cap body 31.

In some embodiments, the part of the first protruding portion 32, which extends into the housing 20, may be in interference fit, transition fit, or clearance fit with the housing 20. Optionally, the part of the first protruding portion 32, which extends into the housing 20, may be in interference fit with the housing 20. The interference fit increases connection strength between the housing 20 and the end cap 30, and improves the sealing performance.

In some embodiments, an outer side face of the first protruding portion 32 abuts on an inner surface of the housing 20 and is configured to be welded to the housing 20 to close the opening 21.

In other embodiments, the end cap 30 further includes an extension portion 36 around the first protruding portion 32. A surface that is of the extension portion 36 and that is oriented toward the first tab 12 abuts on and is welded to an end face of the housing 20 around the opening 21 to close the opening 21.

The extension portion 36 includes an inner surface and an outer surface that are disposed opposite to each other along the thickness direction Z. The inner surface of the extension portion 36 faces the first tab 12. Optionally, the extension portion 36 is an annular plate-shaped structure. The inner surface of the extension portion 36 and the outer surface of the extension portion 36 are both flat faces.

The extension portion 36 and the housing 20 are arranged along the thickness direction Z. The inner surface of the extension portion 36 may be parallel to the end face of the housing 20.

Optionally, during welding, the laser beam is radiated at a junction between the end face of the housing 20 and the inner surface of the extension portion 36. After completion of welding, at least a part of the inner surface of the extension portion 36 and at least a part of the end face of the housing 20 are melted and connected together.

In this embodiment, in a process of fitting the end cap 30 onto the housing 20, the end face of the housing 20 serves a function of limiting the position in the thickness direction Z, thereby reducing the risk of excessive insertion of the end cap 30 into the housing 20, and improving the assembling efficiency.

The cap body 31 may be entirely flat plate-shaped, or may protrude partly.

In some embodiments, the cap body 31 includes a main plate body 313 and a third protruding portion 314. The main plate body 313 surrounds the third protruding portion 314, the first protruding portion 32 surrounds the main plate body 313, and the fragile portion 311 is formed on the third protruding portion 314. The main plate body 313 includes a first inner surface 313a and a first outer surface 313b that are disposed opposite to each other. The first inner surface 313a is oriented toward the electrode assembly 10. Both the first protruding portion 32 and the third protruding portion 314 protrude from the first inner surface 313a toward the electrode assembly 10, and a top end face of the first protruding portion 32 is closer to the first tab 12 than a top end face of the third protruding portion 314, so that the avoidance clearance G configured to avoid the fragile portion 311 is formed between the current collecting member 50 and the third protruding portion 314.

The main plate body 313 is a plate-shaped structure. The first inner surface 313a and the first outer surface 313b are disposed opposite to each other along the thickness direction Z. Optionally, the main plate body 313 is a flat plate structure. The first inner surface 313a and the first outer surface 313b are both flat faces and parallel to each other.

Optionally, the top end face of the first protruding portion 32 and the top end face of the third protruding portion 314 are both flat faces and parallel to each other.

The inner surface of the cap body includes the first inner surface 313a, the top end face of the third protruding portion 314, and a side face of the third protruding portion 314. The side face of the third protruding portion 314 connects the first inner surface 313a and the top end face of the third protruding portion 314. At least a part of the first protruding portion 32 protrudes from the top end face of the third protruding portion 314 toward the electrode assembly 10.

The battery cell 7 may emit a small amount of gas during normal cycling. The gas may increase the internal pressure of the battery cell 7, thereby bringing the risk of deformation of the end cap 30. When the end cap 30 is deformed, the fragile portion 311 is prone to creep. Consequently, the fragile portion 311 may rupture prematurely before the internal pressure of the battery cell 7 reaches the threshold, and result in failure of the battery cell 7.

By disposing the third protruding portion 314 in the middle of the end cap 30, this embodiment increases the strength of the end cap 30 and reduces deformation of the end cap 30. The third protruding portion 314 is in a protruding state and is not prone to deform. Therefore, the fragile portion 311 disposed on the third protruding portion 314 can reduce creeping of the fragile portion 311, thereby reducing the risk of failure of the fragile portion 311.

In this embodiment, the avoidance clearance G is formed between the third protruding portion 314 and the current collecting member 50 to reduce the risk that the current collecting member 50 blocks a degassing channel when the fragile portion 311 is ruptured, ensure smooth degassing, and reduce safety hazards.

In some embodiments, a third recessed portion 315 is formed on the cap body 31 at a position corresponding to the third protruding portion 314. The third recessed portion is recessed from the first outer surface 313b toward the electrode assembly 10. The fragile portion 311 is formed in a region opposite to a bottom face of the third recessed portion 315 on the third protruding portion 314.

The fragile portion 311 is disposed on a part of the third protruding portion 314, where the part is located between the bottom face of the third recessed portion 315 and the top end face of the third protruding portion 314. Optionally, the bottom face of the third recessed portion 315 and the top end face of the third protruding portion 314 are both flat faces and parallel to each other.

The fragile portion 311 is formed in the region opposite to the bottom face of the third recessed portion 315 on the third protruding portion 314, thereby increasing the distance between the fragile portion 311 and other external components, and reducing the risk that an external component crushes the fragile portion 311.

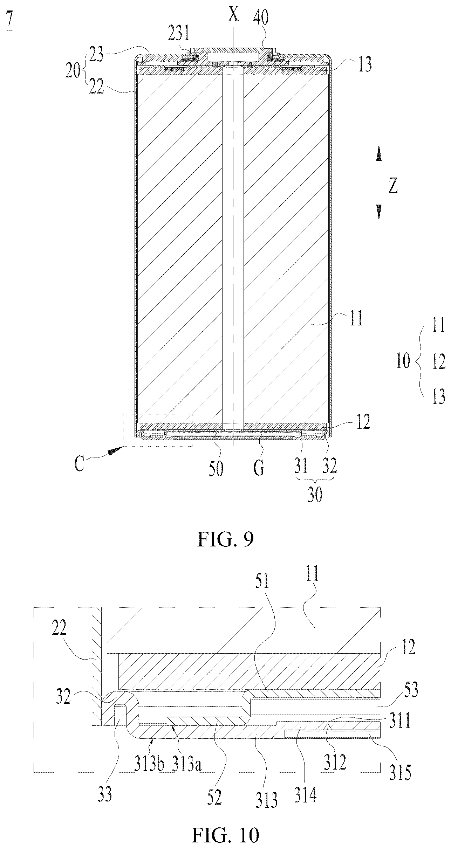

FIG. 9 is a schematic sectional view of a battery cell according to still other embodiments of this application; and FIG. 10 is schematic close-up view of a boxed position C of the battery cell shown in FIG. 9.

As shown in FIG. 9 and FIG. 10, in some embodiments, the first protruding portion 32 surrounds the cap body 31. The current collecting member 50 is configured to connect the cap body 31 and the first tab 12 to implement the electrical connection between the end cap 30 and the first tab 12.

In some embodiments, the current collecting member 50 includes a first current collecting portion 51 and a second current collecting portion 52 connected to the first current collecting portion 51. The first current collecting portion 51 is configured to be connected to the first tab 12 so that the current collecting member 50 is electrically connected to the first tab 12. The second current collecting portion 52 is configured to be connected to the cap body 31 so that the current collecting member 50 is electrically connected to the end cap 30. The first current collecting portion 51 is disposed protrusively on a surface that is of the second current collecting portion 52 and that is oriented toward the electrode assembly 10. An avoidance recess 53 is formed on the current collecting member 50 at a position corresponding to the first current collecting portion 51, and the avoidance recess is recessed toward the electrode assembly 10 from a surface that is of the second current collecting portion 52 and that is oriented away from the electrode assembly 10, so as to form the avoidance clearance G between the current collecting member 50 and the cap body 31.

In this embodiment, the avoidance recess 53 is disposed to form an avoidance clearance G and prevent the first current collecting portion 51 from abutting on the cap body 31, thereby reducing the risk that the first current collecting portion 51 crushes the fragile portion 311, and improving safety.

The first current collecting portion 51 supports a middle region of the first tab 12, and the first protruding portion 32 supports an edge region of the first tab 12, thereby improving uniformity of the force on the first tab 12 and reducing the risk of offset and misalignment of the electrode plate of the electrode assembly 10 in the thickness direction Z.

In some embodiments, the first current collecting portion 51 is configured to abut on and be welded to the first tab 12, and the second current collecting portion 52 is configured to abut on and be welded to the cap body 31.

The avoidance recess 53 reduces the thickness of the first current collecting portion 51, thereby reducing the welding power required for welding the first current collecting portion 51 to the first tab 12, reducing heat emission, and reducing the risk of burning other members (such as a separator).

In some embodiments, the second current collecting portion 52 is a flat plate structure around the first current collecting portion 51.

The cap body 31 may be entirely flat plate-shaped, or may protrude partly.

In some embodiments, the cap body 31 includes a main plate body 313 and a third protruding portion 314. The main plate body 313 surrounds the third protruding portion 314, the first protruding portion 32 surrounds the main plate body 313, and the fragile portion 311 is formed on the third protruding portion 314. The main plate body 313 includes a first inner surface 313a and a first outer surface 313b that are disposed opposite to each other. The first inner surface 313a is oriented toward the electrode assembly 10. Both the first protruding portion 32 and the third protruding portion 314 protrude from the first inner surface 313a toward the electrode assembly 10, and a top end face of the first protruding portion 32 is closer to the first tab 12 than a top end face of the third protruding portion 314, so that the avoidance clearance G configured to avoid the fragile portion 311 is formed between the current collecting member 50 and the third protruding portion 314.

The avoidance recess 53 provides a space for protrusion of the third protruding portion 314. For example, at least a part of the third protruding portion 314 extends into the avoidance recess 53.

In some embodiments, the first protruding portion 32 is configured to abut on and be welded to the first tab 12 to implement electrical connection between the end cap 30 and the first tab 12.

In this embodiment, the end cap 30 may be directly electrically connected to the first tab 12 through the first protruding portion 32, thereby simplifying the structure of the battery cell 7, for example, saving the current collecting member 50.

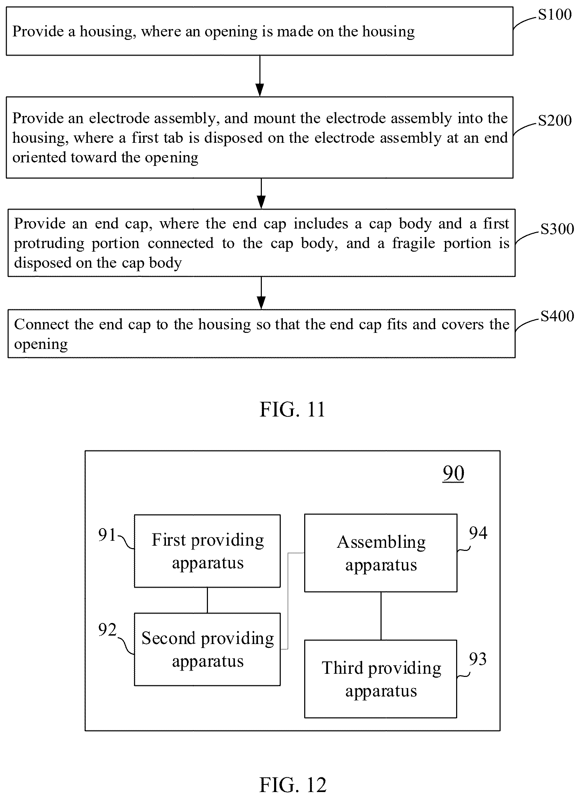

FIG. 11 is a schematic flowchart of a method for manufacturing a battery cell according to some embodiments of this application.

As shown in FIG. 11, the method for manufacturing a battery cell according to an embodiment of this application includes the following steps:
S100: Providing a housing, where an opening is made on the housing;
S200: Providing an electrode assembly, and mounting the electrode assembly into the housing, where a first tab is disposed on the electrode assembly at an end oriented toward the opening;
S300: Providing an end cap, where the end cap includes a cap body and a first protruding portion connected to the cap body, and a fragile portion is disposed on the cap body; and
S400: Connecting the end cap to the housing so that the end cap fits and covers the opening.

The end cap is configured to rupture along the fragile portion when an internal pressure of the battery cell reaches a threshold, so as to release the internal pressure. The first protruding portion protrudes from the cap body toward the electrode assembly, and is configured to support the first tab so that an avoidance clearance configured to avoid the fragile portion is formed between the first tab and the cap body.

It is hereby noted that, for the related structure of the battery cell manufactured by the foregoing method for manufacturing a battery cell, refer to the descriptions of the battery cells provided in the foregoing embodiments.

In assembling a battery cell based on the foregoing method for manufacturing a battery cell, the foregoing steps are not necessarily performed in sequence. That is, the steps may be performed in the order mentioned in the embodiments, or the steps may be performed in order different from what is mentioned in the embodiments, or several steps are performed concurrently. For example, step S100 and step S300 are not necessarily performed sequentially, but may be performed simultaneously.

FIG. 12 is a schematic block diagram of a system for manufacturing a battery cell according to some embodiments of this application.

As shown in FIG. 12, the system 90 for manufacturing a battery cell according to an embodiment of this application includes:
a first providing apparatus 91, configured to provide a housing, where an opening is made on the housing;
a second providing apparatus 92, configured to provide an electrode assembly, and mount the electrode assembly into the housing, where a first tab is disposed on the electrode assembly at an end oriented toward the opening;
a third providing apparatus 93, configured to provide an end cap, where the end cap includes a cap body and a first protruding portion connected to the cap body, and a fragile portion is disposed on the cap body; and
an assembling apparatus 94, configured to connect the end cap to the housing so that the end cap fits and covers the opening.

The end cap is configured to rupture along the fragile portion when an internal pressure of the battery cell reaches a threshold, so as to release the internal pressure. The first protruding portion protrudes from the cap body toward the electrode assembly, and is configured to support the first tab so that an avoidance clearance configured to avoid the fragile portion is formed between the first tab and the cap body.

For the related structure of the battery cell manufactured by the foregoing manufacturing system, refer to the descriptions of the battery cells provided in the foregoing embodiments.

It is hereby noted that to the extent that no conflict occurs, the embodiments of this application and the features in the embodiments may be combined with each other.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the spirit and scope of the technical solutions of the embodiments of this application.

## Claims

1. A battery cell (7), comprising:
a housing (20), on which an opening (21) is made;
an electrode assembly (10), accommodated in the housing (20), wherein a first tab (12) is disposed on the electrode assembly (10) at an end oriented toward the opening (21); and
an end cap (30), configured to fit and cover the opening (21), wherein the end cap (30) comprises a cap body (31) and a first protruding portion (32) connected to the cap body (31), a fragile portion (311) is disposed on the cap body (31), and the end cap (30) is configured to rupture along the fragile portion (311) when an internal pressure of the battery cell (7) reaches a threshold, so as to release the internal pressure, wherein
the first protruding portion (32) protrudes from the cap body (31) toward the electrode assembly (10), and is configured to support the first tab (12) so that an avoidance clearance (G) configured to avoid the fragile portion (311) is formed between the first tab (12) and the cap body (31),
the battery cell (7) further comprising a current collecting member (50) disposed between the end cap (30) and the first tab (12), wherein the current collecting member (50) is configured to connect the end cap (30) and the first tab (12) to implement electrical connection between the end cap (30) and the first tab (12); and
in a thickness direction (Z) of the end cap (30), the avoidance clearance (G) is located between the current collecting member (50) and the cap body (31);
wherein the housing (20) comprises a sidewall (22) being welded to the end cap (30).

2. The battery cell (7) according to claim 1, wherein a first recessed portion (33) is formed on the end cap (30) at a position corresponding to the first protruding portion (32), the first recessed portion (33) is recessed from an outer surface (31b) of the cap body (31) toward the electrode assembly (10), and a bottom face of the first recessed portion (33) is closer to the first tab (12) than an inner surface (31a) of the cap body (31).

3. The battery cell (7) according to claim 1 or 2, wherein the current collecting member (50) overlays the fragile portion (311) along the thickness direction (Z) of the end cap (30) to separate the fragile portion (311) from the first tab (12).

4. The battery cell (7) according to any one of claims 1 to 3, wherein the first protruding portion (32) surrounds the cap body (31), and the current collecting member (50) is configured to connect the cap body (31) and the first tab (12) to implement the electrical connection between the end cap (30) and the first tab (12).

5. The battery cell (7) according to claim 4, wherein the current collecting member (50) comprises a first current collecting portion and a second current collecting portion connected to the first current collecting portion, the first current collecting portion is configured to be connected to the first tab (12) so that the current collecting member (50) is electrically connected to the first tab (12), and the second current collecting portion is configured to be connected to the cap body (31) so that the current collecting member (50) is electrically connected to the end cap (30); and
the first current collecting portion is disposed protrusively on a surface that is of the second current collecting portion and that is oriented toward the electrode assembly (10), an avoidance recess (53) is formed on the current collecting member (50) at a position corresponding to the first current collecting portion, and the avoidance recess (53) is recessed toward the electrode assembly (10) from a surface that is of the second current collecting portion and that is oriented away from the electrode assembly (10), so as to form the avoidance clearance (G) between the current collecting member (50) and the cap body (31); and optionally
the first current collecting portion is configured to abut on and be welded to the first tab (12), and the second current collecting portion is configured to abut on and be welded to the cap body (31).

6. The battery cell (7) according to any one of claims 1 to 3, wherein at least a part of the current collecting member (50) is located between the first protruding portion (32) and the first tab (12); and
the first protruding portion (32) supports the first tab (12) through the current collecting member (50), and optionally
a part of the current collecting member (50) is configured to abut on and be welded to the first tab (12), and another part of the current collecting member (50) is configured to abut on and be welded to the first protruding portion (32), and optionally
the current collecting member (50) is flat plate structure, and optionally
the cap body (31) surrounds the first protruding portion (32), and optionally
the end cap (30) further comprises a second protruding portion (34), and the second protruding portion (34) surrounds the cap body (31); and
the second protruding portion (34) protrudes from an inner surface (31a) of the cap body (31) toward the electrode assembly (10), and a top end face of the second protruding portion (34) is closer to the first tab (12) than a top end face of the first protruding portion (32), so that the second protruding portion (34) abuts on the first tab (12) and is configured to support the first tab (12), and optionally
a second recessed portion (35) is formed on the end cap (30) at a position corresponding to the second protruding portion (34), the second recessed portion (35) is recessed from an outer surface (31b) of the cap body (31) toward the electrode assembly (10), and a bottom face of the second recessed portion (35) is closer to the first tab (12) than the inner surface (31a) of the cap body (31).

7. The battery cell (7) according to any one of claims 4 to 6, wherein the cap body (31) is a flat plate structure.

8. The battery cell (7) according to any one of claims 4 to 6, wherein the cap body (31) comprises a main plate body (313) and a third protruding portion (314), the main plate body (313) surrounds the third protruding portion (314), the first protruding portion (32) surrounds the main plate body (313), and the fragile portion (311) is formed on the third protruding portion (314); and
the main plate body (313) comprises a first inner surface (31a) and a first outer surface (31b) that are disposed opposite to each other, the first inner surface (31a) is oriented toward the electrode assembly (10), both the first protruding portion (32) and the third protruding portion (314) protrude from the first inner surface (31a) toward the electrode assembly (10), and a top end face of the first protruding portion (32) is closer to the first tab (12) than a top end face of the third protruding portion (314), so that the avoidance clearance (G) configured to avoid the fragile portion (311) is formed between the current collecting member (50) and the third protruding portion (314), and optionally
a third recessed portion is formed on the cap body (31) at a position corresponding to the third protruding portion (314), the third recessed portion is recessed from the first outer surface (31b) toward the electrode assembly (10), and the fragile portion (311) is formed in a region opposite to a bottom face of the third recessed portion on the third protruding portion (314).

9. The battery cell (7) according to any one of claims 1 to 8, wherein a groove (312) is made on the cap body (31), and the fragile portion (311) is formed in a region opposite to the groove (312) on the cap body (31).

10. The battery cell (7) according to any one of claims 1 to 9, wherein the end cap (30) is configured to electrically connect the first tab (12) and the housing (20).

11. The battery cell (7) according to claim 10, wherein the housing (20) comprises a bottom wall (23) connected to the sidewall (22), the sidewall (22) extends along a thickness direction (Z) of the end cap (30) and is disposed around the electrode assembly (10), and an electrode lead-out hole (231) is disposed on the bottom wall (23);
the electrode assembly (10) further comprises a second tab (13), and the first tab (12) and the second tab (13) are of opposite polarities and located at two ends of the electrode assembly (10) respectively; and
the battery cell (7) further comprises an electrode terminal (40) mounted in the electrode lead-out hole (231), and the electrode terminal (40) is electrically connected to the second tab (13); and optionally
the bottom wall (23) and the sidewall (22) are disposed in a one-piece form.

12. The battery cell (7) according to any one of claims 10 to 11, wherein the first tab (12) is a negative tab, and a substrate material of the housing (20) is steel.

13. A battery (2), comprising a plurality of battery cells (7) according to any one of claims 1 to 12.

14. An electrical device, comprising the battery (2) according to claim 13, wherein the battery (2) is configured to provide electrical energy.

15. A method for manufacturing a battery cell (7), comprising:
providing a housing (20), wherein an opening (21) is made on the housing (20);
providing an electrode assembly (10), and mounting the electrode assembly (10) into the housing (20), wherein a first tab (12) is disposed on the electrode assembly (10) at an end oriented toward the opening (21);
providing an end cap (30), wherein the end cap (30) comprises a cap body (31) and a first protruding portion (32) connected to the cap body (31), and a fragile portion (311) is disposed on the cap body (31);
connecting the end cap (30) to the housing (20) so that the end cap (30) fits and covers the opening (21), wherein
the end cap (30) is configured to rupture along the fragile portion (311) when an internal pressure of the battery cell (7) reaches a threshold, so as to release the internal pressure; and the first protruding portion (32) protrudes from the cap body (31) toward the electrode assembly (10), and is configured to support the first tab (12) so that an avoidance clearance (G) configured to avoid the fragile portion (311) is formed between the first tab (12) and the cap body (31),
the battery cell (7) further comprising a current collecting member (50) disposed between the end cap (30) and the first tab (12), wherein the current collecting member (50) is configured to connect the end cap (30) and the first tab (12) to implement electrical connection between the end cap (30) and the first tab (12); and
in a thickness direction (Z) of the end cap (30), the avoidance clearance (G) is located between the current collecting member (50) and the cap body (31);
wherein the housing (20) comprises a sidewall (22) being welded to the end cap (30).
